(19) Europäisches Patentamt
European Patent Office
Office européen des brevets

(11) EP 0 580 093 B1

(12) EUROPÄISCHE PATENTSCHRIFT

(45) Veröffentlichungstag und Bekanntmachung des Hinweises auf die Patenterteilung:
**29.07.1998 Patentblatt 1998/31**

(51) Int Cl.6: **C08G 63/185**, C08J 5/18

(21) Anmeldenummer: **93111488.8**

(22) Anmeldetag: **17.07.1993**

(54) **Biaxial orientierte Folie enthaltend Schichten aus Polyethylennaphthalatbibenzoat (PENBB), Verfahren zur Herstellung dieser Folien und Verwendung derselben**

Biaxially oriented film comprising layers of polyethylennaphthalate bibenzoate (PENBB), process for preparing these films and application thereof

Feuille mince selon un double axe contenant des couches de polyéthylènenaphtalatebibenzoate (PENBB), procédé de préparation de ces feuilles et utilisation de celles-ci

(84) Benannte Vertragsstaaten:
**DE FR GB IT LU NL**

(30) Priorität: **22.07.1992 DE 4224161**
**12.11.1992 DE 4238128**

(43) Veröffentlichungstag der Anmeldung:
**26.01.1994 Patentblatt 1994/04**

(73) Patentinhaber: **HOECHST AKTIENGESELLSCHAFT**
**65926 Frankfurt am Main (DE)**

(72) Erfinder:
- **Bennett, Cynthia**
  **D-55232 Alzey (DE)**
- **Kuhmann, Bodo**
  **D-65594 Runkel (DE)**
- **Ward, Bennett**
  **Denver, N.C. 28037 (US)**
- **Choe, E-Won**
  **Randolph, N.J. 07869 (US)**
- **Flint, John Anthony**
  **Berkeley Heights, N.J. 07922 (US)**

(74) Vertreter: **Zounek, Nikolai, Dipl.-Ing.**
**Patentsanwaltskanzlei Zounek,**
**Industriepark Kalle Albert,**
**Gebäude H287**
**65203 Wiesbaden (DE)**

(56) Entgegenhaltungen:
**EP-A- 0 378 031** **EP-A- 0 386 707**
**EP-A- 0 488 603** **WO-A-90/10027**
**WO-A-93/02122** **US-A- 2 976 266**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 580 093 B1

## Beschreibung

Die vorliegende Erfindung betrifft eine ein- oder mehrschichtige biaxial orientierte Folie, wobei mindestens eine Schicht der biaxial orientierten Folie fast ausschließlich aus Polyethylennaphthalat-bibenzoat besteht.

Insbesondere auf dem Gebiet der Trägerfolien für magnetische Aufzeichnungsmaterialien wie Videobänder besteht nach wie vor ein Bedürfnis, mehr Daten auf kleinerem Raum unterzubringen. Hierzu ist es einerseits nötig, die Trägerfolienstärke noch weiter zu reduzieren, um somit die Bandlänge bei vorgegebenem Kassettenvolumen zu erhöhen, und andererseits neue Beschichtungen mit höherer Schreibdichte wie ME-Schichten ("metal evaporated") oder "perpendicular recording", deren Auftragungstechnik eine höhere Temperaturbelastung für die Trägerfolie bedeutet, zu verwenden.

Bei Kondensatordielektrika werden ebenfalls die gleichen Forderungen nach geringeren Foliendicken und Temperaturbeständigkeit gestellt. Dies bringt Vorteile bei der Raumausnutzung des Kondensators und beim Lötvorgang.

Die Reduzierung der Trägerfoliendicke ist jedoch nur möglich, wenn die Steifigkeit der Folie (E-Modul) sowohl in Längs- als auch in Querrichtung bei gleichbleibender Dicke verbessert wird. Herkömmliche Trägerfolien aus Polyethylenterephthalat (PET) stoßen bei einer Dicke von ca. 7 µm an die Grenze der mechanischen Stabilität. In letzter Zeit hat man versucht, PET-Trägerfolien durch solche aus Polyethylennaphthalat (PEN) zu ersetzen. PEN besitzt zwar gegenüber PET eine erhöhte mechanische Stabilität (bei "balanced" Folien erhält man z.B. E-Modul-Werte bis ca. 8 GPa [PEN] anstelle von ca. 6 GPa [PET]), jedoch ist die Wärmestabilität der Folie nur geringfügig höher. Aus Polyphenylensulfid (PPS) können Folien hergestellt werden, die zwar höher wärmebeständig als PEN-Folien sind; deren mechanische Stabilität jedoch geringer, sogar etwas geringer als die einer PET-Folie, ist.

Vor allem auf dem Fasergebiet hat es auch nicht an Versuchen gefehlt, PET durch Copolyester zu ersetzen. So beschreiben eine Reihe von Veröffentlichungen Copolyester aus Ethylenterephthalat/Naphthalat oder Ethylenterephthalat/Bibenzoat (z.B. JP 54/095634 [Toyobo], JP 02/038422 [Toyobo], JP 01/113811 [Teijin], EP-A-0 202 631 [Teijin]). In der JP 03/252449 [Teijin] werden Copolyester beschrieben, in denen die Dicarbonsäurekomponente ausgewählt wird u.a. aus Terephthalsäure, Naphthalin-2,6-dicarbonsäure und 4,4'-Bibenzoesäure (4,4'-Dicarboxy-diphenyl) und die Diolkomponente aus Ethylenglykol und Resorcin abgeleitet ist. Aufgrund ihres immer noch recht hohen Anteils an Terephthalat konnten biaxial orientierte Folien aus diesen Materialien keine wesentliche Verbesserung hinsichtlich der mechanischen Stabilität bringen. Auch ließen ihre Temperaturbeständigkeiten noch zu wünschen übrig. Schließlich werden in der JP 50/135333 [Teijin] Fasermaterialien beschrieben, die aus einem Copolyester aus Polyethylen-2,6-naphthalat mit 0,5 bis 20 % 4,4'-Bibenzoat bestehen. Ein höherer Anteil an Bibenzoat als 20 % ist gemäß der Lehre dieses Dokuments nachteilig, weil dann der Schmelzpunkt des resultierenden Polymers zu sehr erniedrigt wird. Folien aus diesen Materialien werden in diesem Dokument nicht beschrieben.

In der US-A-3,008,934 werden faser- und filmbildende Copolyestermassen beschrieben, die als säureabgeleitete Bausteine 4,4'-Bibenzoesäure enthalten. Biaxial orientierte Folien aus diesen Materialien sind dort nicht beschrieben. In der US-A-2,976,266 werden Polyesterfolien beschrieben, die aus einem Polyester bestehen, der zu 100 % im Dicarbonsäureanteil aus Bibenzoat besteht.

Aus der EP-A-0 488 603 sind Polyester bekannt, die neben üblichen Dicarbonsäuren wie Terephthalatsäure, Isophthalatsäure oder Naphthalindicarbonsäure noch andere Dicarbonsäuren in Mengen enthalten, die 20 Mol-% nicht überschreiten.

Es bestand deshalb das Bedürfnis fort, nach steiferen und - wenn möglich - temperaturbeständigeren, biaxial orientierten Folien, insbesondere für dünnere Magnetbänder und Kondensatordielektrika.

Es wurde nun gefunden, daß ein- oder mehrschichtige, biaxial orientierte Folien mit einer Gesamtdicke von 0.05 bis 500 µm, vorzugsweise von 0,1 bis 400 µm, insbesondere von 0,5 bis 200 µm, enthaltend einen Copolyester, der mindestens zwei verschiedene dicarbonsäureabgeleitete Wiederholungseinheiten enthält, von denen eine eine Wiederholungseinheit der Formel

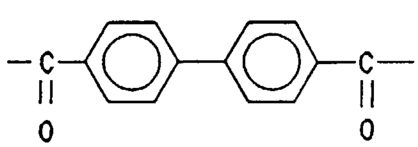

ist, wobei diese Wiederholungseinheit 25 bis 90 Mol-% der im Copolyester vorhandenen dicarbonsäureabgeleiteten Wiederholungseinheiten ausmacht und als diolabgeleite Komponente 90 bis 100 Mol-% an Wiederholungseinheiten der Formel $-O-(CH_2)_n-O-$ (mit n = 2 bis 6) enthält, außerordentlich gute spezifische Steifigkeiten (≙ mechanische Stabilität) bei gleichzeitig hoher Temperaturbeständigkeit aufweisen.

Insbesondere zeigte sich, daß obengenannte biaxial orientierte Folien dann besonders gute mechanische Stabilitäten aufwiesen, wenn der Copolyester als dicarbonsäureabgeleitete Wiederholungseinheiten neben dem Baustein

der Formel

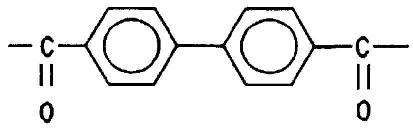

noch weitere dicarbonsäureabgeleitete Wiederholungseinheiten der Formeln

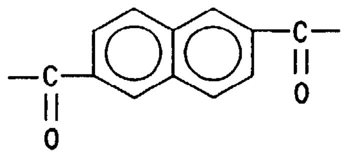

und/oder

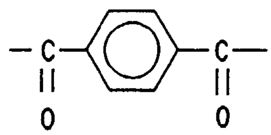

enthält, wobei auch hier die Wiederholungseinheit der Formel

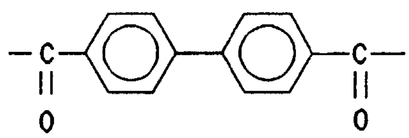

25 bis 90 Mol-% der im Copolyester vorhandenen dicarbonsäureabgeleiteten Wiederholungseinheiten ausmacht.

Es wurde darüberhinaus gefunden, daß copolyesterhaltige, biaxial orientierte Folien dann ganz besonders gute mechanische Stabilitäten aufwiesen, wenn der Copolyester weniger als 10 Mol-% (bezogen auf die im Copolyester vorhandenen dicarbonsäureabgeleiteten Wiederholungseinheiten) an Wiederholungseinheiten der Formel

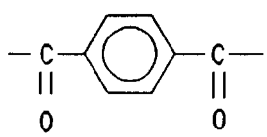

enthält und der Gehalt an Wiederholungseinheiten der Formel

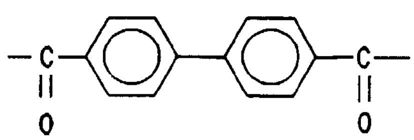

25 bis 90 Mol-% (bezogen auf die im Copolyester vorhandenen dicarbonsäureabgeleiteten Wiederholungseinheiten)

beträgt.

Ganz besonders bevorzugt ist eine ein- oder mehrschichtige, biaxial orientierte Folie mit einer Gesamtdicke von 0,05 bis 500 µm, wobei mindestens eine Schicht dieser Folie aus einem Polymeren aus den Wiederholungseinheiten -(A-B)- und 0 bis 10 Gew.-% Additiven besteht, wobei die beiden Komponenten A und B in etwa gleichen molaren Anteilen im Polymeren vorhanden sind und wobei die Komponente A aus:

1 bis 75 Mol-% der Wiederholungseinheit der Formel I

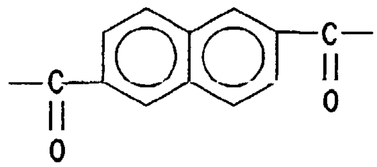

( I )

90 bis 25 Mol-% der Wiederholungseinheit der Formel II

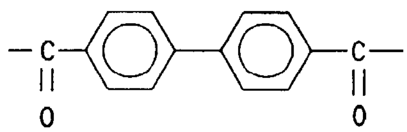

( I I )

und

0 bis 10 Mol-% einer oder mehrerer Wiederholungseinheiten A' ausgewählt aus

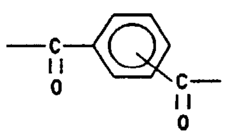

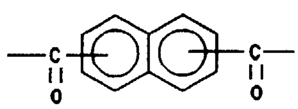

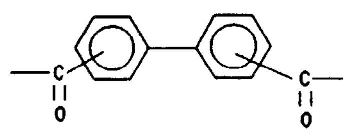

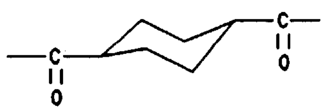

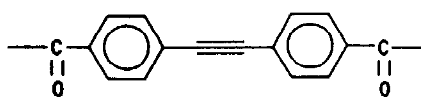

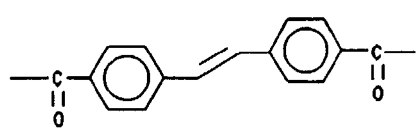

und $C_{1-6}$-alkyldicarbonsäuren

besteht, mit der Maßgabe, daß die Summe der Bestandteile der Formeln I, II und A' 100 Mol-% nicht übersteigt und wobei die Komponente B aus:

90 bis 100 Mol-% der Wiederholungseinheit der Formel III

$$-O-(CH_2)_n-O \qquad (III)$$

mit n = 2-6

und

0 bis 10 Mol-% einer oder mehrerer Wiederholungseinheiten B', ausgewählt aus:

$$-O-(CH_2)_m-O-$$

mit

m = 2 bis 6, bevorzugt 2 bis 4, wobei
$m \neq n$

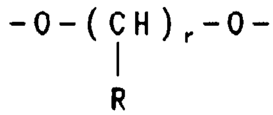

mit

r = 2 bis 6, bevorzugt 2 bis 4

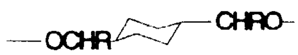

endo and/or exo

R = H, $C_1$-$C_4$-Alkyl

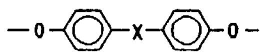

mit

X = $-CH_2-$, $-C(CH_3)_2-$, -O-, $-C(CF_3)_2-$, -S-, $-SO_2-$
und

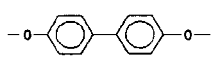

besteht
sowie 0 bis 10 Mol-% einer Wiederholungseinheit C, die ausgewählt ist aus:

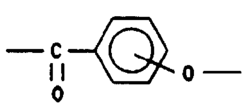
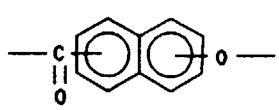

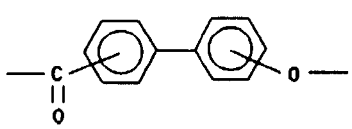

und Hydroxy-$C_{1-6}$-alkylcarbonsäuren,
wobei jeweils eine Wiederholungseinheit C jeweils eine Wiederholungseinheit A und eine Wiederholungseinheit B ersetzt.

Fasern aus diesen Polymeren (PENBB) werden bereits in der älteren US Patent Application Serial No 07/735,553 vorgeschlagen. Dort wird auch vorgeschlagen, Folien aus diesen Materialien herzustellen. Welche Dicke diese Folien aufweisen sollen, wird dort jedoch nicht erwähnt.

Viele der oben als Ausgangsmaterial für biaxial orientierte Folien beschriebenen Copolyester sind in der US-A-3,008,934 beschrieben, die jedoch hinsichtlich der verwendbaren Dicarbonsäure- und Dioleinheiten wesentlich umfangreicher ist. Diese Schrift offenbart auch, daß aus diesen Copolyestern Fasern und orientierte Folien hergestellt werden können. Ein Hinweis auf die Herstellung von biaxial orientierten Folien findet sich dort nicht. Vor dem Hintergrund des heutigen Fachwissens ist es auch unwahrscheinlich, daß ein Fachmann die Copolyester gemäß US-A-3,008,934 zur Herstellung von biaxial orientierten Folien verwendet hätte. Aus der US-A-3,008,934 geht hervor, daß reines Polyethylen-4,4'-bibenzoat eine außerordentlich hohe Kristallisationsgeschwindigkeit besitzt. Die Herstellbarkeit von biaxial orientierten Folien, welche Bibenzoat, insbesondere in den hohen Mengen (40-90 Gew.-%) wie in der US-A-3,008,934 beschrieben, enthalten, mußte daraus deshalb bezweifelt werden, da eine zu rasche Kristalliation zu einer zu raschen Versprühung der Folie noch im Herstellungsverfahren führt, mit der Folge, daß die Folie abreißt, bevor die biaxiale Orientierung erreicht ist.

Fasern aus PENBB mit einem Bibenzoatanteil von 0,5 bis 20 % werden in der JP 50/135333 [Teijin] beschrieben. Die Herstellbarkeit von Folien, vor allem von biaxial orientierten Folien, mußte von einem Fachmann aus den gleichen Gründen wie oben (zu rasche Kristallisation) beschrieben, bezweifelt werden. In diesem Hinblick auf die Kristallisationsgeschwindigkeit sind die Anforderungen der Faserherstellung weitaus geringer, als die uniaxiale Orientierung bei Fasern rascher als eine biaxiale Orientierung bei Folien durchgeführt werden kann. Daß sich gar biaxial orientierte Folien mit verbesserten mechanischen und thermischen Eigenschaften bei Bibenzoatgehalten oberhalb 20 % herstellen lassen, mußte angesichts der Lehre der JP 50/135333 (oberhalb 20 % Bibenzoat zu starke Erniedrigung des Schmelzpunktes) und der US-A-3,008,934 überraschen.

Die erfindungsgemäße 0,05 bis 500 µm dicke, biaxial orientierte Folie kann ein- oder mehrschichtig sein. Bevorzugt ist sie einschichtig und enthält 25 bis 90 Mol-% Bibenzoat. Bei mehrschichtigen Folien ist es bevorzugt, wenn zumindest eine Schicht fast ausschließlich aus PENBB besteht. Die übrigen Schichten können entweder ebenfalls aus PENBB oder aber aus einem anderen thermoplastischen Kunststoff wie PET, PEN, PPS, Polyolefinen wie Polypropylen oder Polyamiden oder -aramiden bestehen.

"Fast ausschließlich" aus PENBB bedeutet, daß neben PENBB noch in geringer Menge Additive oder Verunreinigungen vorhanden sein können wie Katalysatorrückstände, Verarbeitungshilfsmittel, Wickelhilfsmittel, Stabilisatoren, Antioxidantien, Weichmacher oder Gleitmittel. Gewöhnlich sind diese Additive (Verunreinigungen) in einer Konzentration von maximal 10 Gew.-%, bevorzugt 0,01 bis 5 Gew.-%, insbesondere 0,1 bis 2 Gew.-% vorhanden. Bei den Katalysatorrückständen kann es sich beispielsweise um Antimontrioxid oder Tetraalkoxytitanate handeln. Als Verarbeitungshilfsmittel oder Gleitmittel können Siloxane, insbesondere polymere Dialkyl- oder Diarylsiloxane, Salze und Wachse, sowie höherkettige ($C_{\geq 6}$) organische Carbonsäuren, Ester und Ether (sowohl aliphatische, aromatische und/oder perfluorierte) in Mengen bis 1 % eingesetzt werden. Als Wickelhilfsmittel kommen beispielsweise Pigmente in Frage. Unter Stabilisatoren werden beispielsweise Phosphorverbindungen wie Phosphorsäure oder Phosphorsäureester verstanden und als Gleitmittel können beispielsweise Fettsäuren und -ester, PTFE-Wachse oder Polydiorganosiloxane eingesetzt werden. Darüber hinaus können, sofern erforderlich, auch Viskositätsmodifizierer und Stoffe zur Modifizierung des Schmelzpunktes ($T_m$), beziehungsweise der Glasübergangstemperatur ($T_g$) oder solche, die die Kristallisationskinetik beziehungsweise -grad beeinflussen, eingesetzt werden. Bei den Viskositätsmodifizierern handelt es sich beispielsweise um mehrwertige Carbonsäuren oder deren Ester wie Trimesin- oder Trimellitsäure oder um mehrwertige Alkohole wie Ethylenglycol oder Glycerin. Diese Verbindungen werden entweder dem fertigen Polymeren beigemischt oder bevorzugt als Copolymerisationsbestandteile bei der Herstellung der Polymeren in gewünschter Menge hinzugegeben.

Darüber hinaus können dem Polymeren feste Teilchen hinzugegeben werden, entweder vor beziehungsweise während der Polymerisation oder später zu dem fertigen Polymeren. Solche Partikel werden bevorzugt eingesetzt, um die Oberflächeneigenschaften der Folien zu verändern. Erfindungsgemäß können beispielsweise Kaolin, Talk, $SiO_2$, $MgCO_3$, $CaCO_3$, $BaCO_3$, $CaSO_4$, $BaSO_4$, $Li_3PO_4$, $Ca_3(PO_4)_2$, $Mg_3(PO_4)_2$, $Al_2O_3$, LiF oder die Ca-, Ba-, Zn-, Mn-Salze der Terephthalsäure, oder Kohlenstoff (Ruß) zugesetzt werden. Es können allerdings auch Teilchen auf Basis vernetzter, unschmelzbarer, organischer Polymeren wie z.B. Polystyrole, Polyacrylate, Polymethacrylate zugesetzt werden. Bevorzugt werden die Partikel in einer Konzentration von 0,01 bis 1 Gew.-%, besonders bevorzugt in einer Konzentration von 0,05 bis 0,8, insbesondere 0,1 bis 0,8 Gew.-% (bezogen auf das Gewicht der Schicht) eingesetzt. Die durchschnittliche Teilchengröße beträgt 0,001 bis 10 µm, bevorzugt 0,001 bis 3 µm.

Das Polymere (Copolyester) erhält man durch Polykondensation der entsprechenden Säure- und Alkoholkomponenten. Beide Komponenten sollten zweckmäßigerweise in etwa gleichen molaren Verhältnissen vorliegen. Sofern zweckmäßig - beispielsweise um die Reaktionskinetik zu beeinflussen oder als Lösungsmittel zu dienen, kann auch eine der beiden Komponenten - bevorzugt das Diol - im Überschuß eingesetzt werden. Die Polykondensation wird nach üblichen Verfahren durchgeführt, indem man beispielsweise ausgeht von 100 Mol-% der entsprechenden Dicarbonsäuren und/oder Dicarbonsäuredialkylester wie Dicarbonsäuredimethyl- oder -diethylester und ≥ 100 Mol-% des Diols, die zunächst gegebenenfalls in Anwesenheit eines Umesterungskatalysators auf ca. 200 °C erhitzt werden, bis genügend Methyl- beziehungsweise Ethylalkohol abdestilliert ist, wobei ein nieder-molekularer Oligo- bzw. Polyester

entsteht. Dieser nieder-molekulare Polyester kann dann gegebenenfalls in einer zweiten Stufe bei einer Reaktionstemperatur von ca. 240 bis 25 °C über dem Schmelzpunkt des Polyesters, gegebenenfalls in Anwesenheit eines Katalysators, zu einem höher molekularen Polyester polykondensieren. Als Katalysatoren können die üblicherweise für Polykondensationen verwendeten Katalysatoren wie Polyphosphate, Triorganylphosphate, Antimontrioxid oder Tetraalkoxy-titanate-(IV), oder beispielsweise Mischungen aus Triphenylphosphor und Antimontrioxid eingesetzt werden. Das Verfahren zur Herstellung dieser Polymere ist beispielsweise beschrieben in der U.S. Patent Application Serial No. 07/735,553, auf die an dieser Stellung ausdrücklich Bezug genommen wird. Um eine weitere Erhöhung des Molekulargewichts zu erreichen, kann eine Festphasenpolykondensation bei Temperaturen unter dem Schmelzpunkt des Polymeren unter Vakuum, trockner Luft oder Inertgas durchgeführt werden.

Der Copolyester der erfindungsgemäßen ein- oder mehrschichtigen, biaxial orientierten Folie enthält mindestens zwei verschiedene dicarbonsäureabgeleitete Wiederholungseinheiten, von denen die eine eine Wiederholungseinheit der Formel II

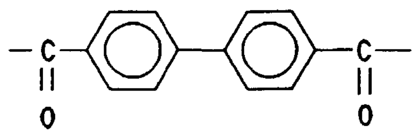
(II)

ist, die in dem Copolyester zu 25 bis 90 Mol-% (bezogen auf die im Copolyester vorhandenen dicarbonsäureabgeleiteten Wiederholungseinheiten) vorhanden ist. Als weitere dicarbonsäureabgeleiteten Wiederholungseinheiten können alle üblicherweise vorhandenen Bausteine dieser Art eingesetzt werden, beispielsweise solche der Formelr

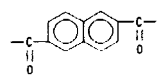
(I)

und/oder

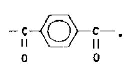

Als ganzbesonders bevorzugter Copolyester hat sich der fast ausschließlich aus PENBB bestehende Copolyester -(A-B)- erwiesen.

Als Säurekomponente A enthält das fertige Polymer -(A-B)-$_x$ (x = mittlere Kettenlänge) überwiegend die Wiederholungseinheiten der Formeln I und II

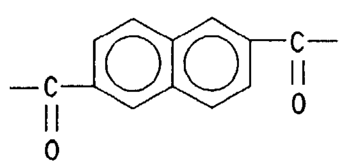
(I)

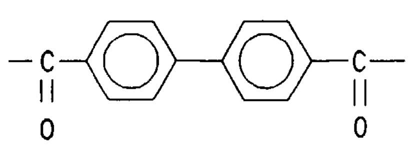
(II)

die sich von Naphthalin-2,6-dicarbonsäure [I] beziehungsweise 4,4'-Bibenzoat (4,4'-Dicarboxydiphenyl) [II] ableiten.

Insbesondere zur Modifizierung der Schmelztemperatur $T_m$ und der Glasübergangstemperatur $T_g$, beziehungsweise zur Beeinflussung der Kristallisationskinetik, kann die Säurekomponente A noch geringe Mengen artverwandter Säurekomponenten A' enthalten, wie beispielsweise:

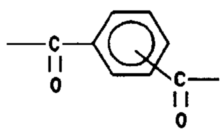 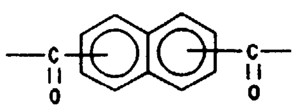 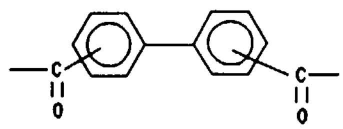

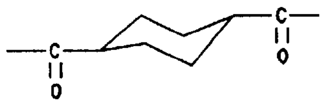 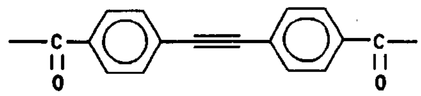

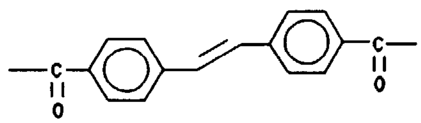

und $C_{1-6}$-alkyldicarbonsäuren

Bevorzugte Säurekomponenten A' sind:

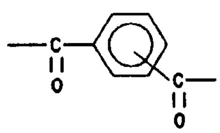 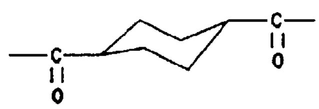

Überraschenderweise wurde festgestellt, daß im Gegensatz zur Lehre der JP 50/135333 [Teijin] Polymere mit einem Bibenzoatanteil (Formel II) von > 20 Mol-%, insbesondere > 25 Mol-% keine weitere Erniedrigung des Schmelzpunktes aufweisen. Im Gegenteil, mit zunehmendem Bibenzoatanteil steigt der Schmelzpunkt wieder an (s. Fig. 1). Aus diesem Grund sind solche Folien bevorzugt, die Schichten enthalten, die überwiegend aus einem PENBB aufgebaut sind, welches einen Bibenzoatanteil (Formel II) von 25 - 90 Mol-%, besonders bevorzugt 40 - 60 Mol-% aufweist. Überraschenderweise lassen sich Folien mit diesem relativ hohen Bibenzoatanteil noch biaxial orientieren.

Als Diolkomponente B enthält das fertige Polymer $-(A-B)-_x$ überwiegend die Wiederholungseinheit der Formel III

$$-O-(CH_2)_n-O- \qquad (III)$$

mit

n = 2 bis 6, vorzugsweise 2 bis 4, besonders bevorzugt 2.

Neben der Wiederholungseinheit der Formel III können jedoch, sofern zweckmäßig, auch in geringen Mengen artverwandte Diolkomponenten der Formel B', wie beispielsweise

$$-O-(CH_2)_m-O-$$

mit

m = 2 bis 6, bevorzugt 2 bis 4, wobei

$m \neq n$

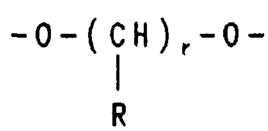

mit r = 2 bis 6, bevorzugt 2 bis 4

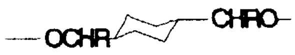

endo and/or exo

R = H, $C_1$-$C_4$-Alkyl

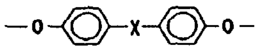

mit X = $-CH_2-$, $-C(CH_3)_2-$, -O-, $-C(CF_3)_2-$, -S-, $-SO_2-$
und

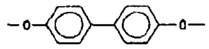

oder beliebige Mischungen dieser Wiederholungseinheiten vorhanden sein. Diolkomponenten der Formel B' können in der Diolkomponente B in Mengen von bis zu 10 Mol-% (bezogen auf 100 Mol-% der Diolkomponente B) vorhanden sein; d.h. die Summe der molaren Anteile der Komponente der Formel III und die der Formel B' beträgt zusammen 100 Mol-%. Bevorzugt beträgt der molare Anteil der Komponente B' 0 - 3 Mol-%.

Insgesamt beträgt der Anteil der Säurekomponente A 100 Mol-%. Diese 100 Mol-% teilen sich auf die Komponenten der Formel I, II und gegebenenfalls A' auf. Die Komponente der Formel I ist in Anteilen von 1 bis 75 Mol-% vorhanden; die Differenz bis zu 100 Mol-% entspricht dem Anteil der Komponente der Formel II, so daß diese in Anteilen von 90 bis 25 Mol-% vorhanden ist. Ist auch eine Komponente der Formel A' vorhanden (was nicht zwingend erforderlich ist), so wird deren Anteil von dem Anteil der Komponente der Formel I und/oder dem der Komponente der Formel II abgezogen. Maximal beträgt der Anteil der Komponente der Formel A' 10 Mol-%. Die Summe aller Komponenten I, II und A' beträgt zusammen 100 Mol-%.

Sofern zweckmäßig - beispielsweise um die Kristallisationskinetik, die Schmelztemperatur oder die Glasübergangstemperatur zu beeinflussen - können Teile der Dicarbonsäure- und Diolkomponenten (A und B) durch Hydroxycarbonsäurekomponenten 0 ersetzt werden. Stöchiometrisch ersetzt eine Hydroxycarbonsäure eine Diolkomponente und eine Dicarbonsäurekomponente. Als Hydroxycarbonsäurekomponenten C enthält das Polymere $-(A-B)_x-$ beispielsweise Wiederholungseinheiten der Formel C

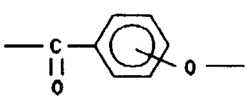

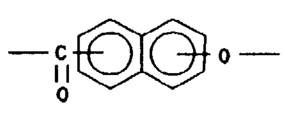

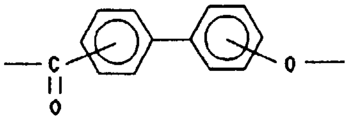

Bevorzugt ist die Wiederholungseinheit

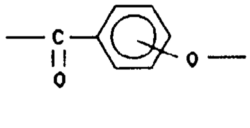

Die Hydroxysäurekomponente C ist in Molanteilen von 0 bis 10 % bezogen auf die Säurekomponente A vorhanden. Bevorzugt beträgt der molare Anteil der Komponente C 0 - 3 Mol-%.

Sowohl in der Säurekomponente A als auch in der Diolkomponente B und der Hydroxysäurekomponente C können - sofern erforderlich - die Benzol- beziehungsweise Naphthalin-Ringe substituiert sein. Als Substituenten kommen ein oder mehrere gleiche oder verschiedene Reste wie $C_1$-$C_6$-Alkyl, $C_1$-$C_5$-Alkoxy, Halogen (Chlor, Brom, Jod), CN, $NO_2$, $CF_3$, oder Phenyl in Frage.

Die inhärente Viskosität des Polymeren $-(A-B)_x$ ist größer gleich 0,5 dl/g, insbesondere 0,55 bis 1,7 dl/g. Die inhärente Viskosität (IV) wird bei einer Konzentration von 0,1 g/dl oder 0,2 g/dl in Pentafluorphenol/Hexafluorisopropanl [Volumenverhältnis 1:1] bei 25 °C). bei zu erwartenden IV-Werten > 1,0 dl/g wird bei einer Konzentration von 0,1 g/dl gemessen, bei allen anderen bei 0,2 g/dl. Die mittlere Kettenlänge x in $-(A-B)_x-$ ist bevorzugt ≥30 und ≤400. Das Zahlenmittel des Molekulargewichts $\overline{M}_n$ liegt zwischen 10.000 und 100.000, bevorzugt zwischen 20.000 und 50.000.

Überraschenderweise hat sich gezeigt, daß biaxial orientierte Folien aus den oben beschriebenen bevorzugten und insbesondere den besonders bevorzugten Copolyestern außerordentlich gute Gasbarriereeigenschaften, eine äußerst geringe Wasseraufnahme, einen sehr günstigen Verlauf des dielektrischen Verlustfaktors bis hin zu Temperaturen über 150 °C sowie außerordentlich gute UV-Stabilität aufweisen.

Die Herstellung der erfindungsgemäßen Folie erfolgt nach den bekannten Verfahren, beispielsweise nach dem Gieß- oder Koagulationsverfahren oder dem Extrusionsverfahren. Wird die Folie nach dem Gieß- oder Koagulationsverfahren hergestellt, so ist darauf zu achten, daß sie vor der Orientierung nicht kristallisiert. In der Regel sind Gieß- und Koagulationsverfahren wesentlich teurer als Extrusionsverfahren und schon allein deshalb nicht bevorzugt.

Bei dem bevorzugten Extrusionsverfahren wird eine der Zusammensetzung des Polymeren entsprechende Schmelze aus einer Düse extrudiert, abgenommen, biaxial gestreckt, gegebenenfalls thermofixiert, gegebenenfalls nachbehandelt und anschließend aufgerollt. Sofern eine mehrschichtige Folie hergestellt werden soll, kann dies beispielsweise über die bekannten Verfahren der Coextrusionssowie der In-line- oder Off-Line-Beschichtung erfolgen. Die Extrusion kann blattförmig (Flachfolien) oder schlauchförmig (Schlauchfolien) erfolgen.

Zur Herstellung einer weitgehend amorphen PENBB-Folie wird diese zweckmäßigerweise direkt nach ihrer Extrusion aus einer Breitschlitzdüse auf eine Kühlwalze angelegt oder beispielsweise in ein Kühlbad eingeleitet. Solche amorphen Folien sind transparent und ihre Dichten sind niedriger als die kristalliner Folien.

Zur Herstellung der steifen, festen, biaxial orientierten Folien werden die extrudierten amorphen Vorfolien gestreckt. Bei der biaxialen Streckung gibt es die Möglichkeit, die jeweiligen Streckvorgänge nacheinander, wobei wahlweise mit der Quer- oder Längsstreckung begonnen wird, oder simultan durchzuführen. In manchen Fällen kann es sich als zweckmäßig erweisen, an eine erste Längs- und/oder Querstreckung, die simultan oder sukzessiv erfolgte, eine oder mehrere weitere Längs- und/oder Querstreckungen anzuschließen; auch diese können nacheinander oder simultan durchgeführt werden. Zwischen einzelne dieser Streckschritte können auch Relaxationsschritte eingefügt werden, wobei die Folie gezielt wieder etwas schrumpft. Nach Abschluß des Streckvorgangs empfiehlt es sich, die Folie zu fixieren, indem man sie bei erhöhter Temperatur dimensionsstabil hält oder nur einen geringen Schrumpf zuläßt (Thermofixierung). Während der Fixierung kristallisiert die Folie. Sofern die Folie keine Pigmente in hoher Konzentration enthält, ist diese Folie als Folge der Orientierung noch transparent. Die Dichte ist jedoch höher als die der amorphen Folie. Bevorzugt werden die Streckungen bei einer Temperatur durchgeführt, die zwischen der Glasübergangstemperatur und ca. 30 °C oberhalb der Kaltkristallisationstemperatur liegt. Beide Temperaturen lassen sich beispielsweise mittels DSC (Differential Scanning Calorimetry) ermitteln. Die Streckverhältnisse sowohl in Längs- als auch in Querrichtung liegen zwischen $\lambda_{l\ bzw.q}$ = 1:1,1 und $\lambda_{l\ bzw.q}$ = 1:10, vorzugsweise zwischen $\lambda_{l\ bzw.q}$ = 1:2 und $\lambda_{l\ bzw.q}$ = 1:5. Das Produkt aus Gesamtlängs- und Gesamtquerstreckung liegt bevorzugt zwischen $\lambda_{lxq}$ = 1:4 und $\lambda_{lxq}$ = 1:20. Die Thermofixierung kann bei einer Temperatur, die zwischen der Kaltkristallisationstemperatur und der Schmelztemperatur liegt, erfolgen. Die erfindungsgemäßen, biaxial orientierten PENBB-Folien weisen eine Doppelbrechung $\Delta n$ < 0,2, bevorzugt $\Delta n$ = 0,0-0,1 auf. Die Doppelbrechung, $\Delta n$, ist der Absolutwert der Differenz der maximalen und minimalen Brechungsindices in der Folienebene und kann durch übliche Geräte wie Abbé-Refraktometer, optisches Bank oder Kompensationskeilen bestimmt werden. Für manche Einsatzzwecke empfiehlt es sich, die Folie vor dem Aufrollen noch einer Nachbehandlung wie Corona-, Plasma- oder Flammbehandlung zu unterziehen.

Die Gesamtdicke der erfindungsgemäßen, biaxial orientierten Folien richtet sich nach dem jeweiligen Anwendungszweck und liegt zwischen 0,05 und 500 µm. Insbesondere für die Anwendung als Magnetbandfolie haben sich Monofolien mit einer Gesamtdicke von 3 bis 20 µm, bevorzugt von 5 bis 15 µm als zweckmäßig erwiesen. Für die Anwendung als Kondensatordielektrikum eignen sich Dicken von 0,05 bis 12 µm, bevorzugt von 0,1 bis 6 µm, besonders bevorzugt von 0,5 bis 4 µm. Für die Anwendung als Elektroisolierfolie eignen sich Dicken von 15 bis 400 µm, bevorzugt von 24 bis 350 µm.

Die erfindungsgemäßen, biaxial orientierten Folien, insbesondere solche mit einem Bibenzoatanteil von > 25 Mol-%, bevorzugt 35 bis 60 Mol-%, insbesondere 40 bis 60 Mol-%, zeichnen sich durch hohe Steifigkeit, d.h. einen hohen E-Modulwert sowohl in Quer- als auch in Längsrichtung aus. Insbesondere liegt die Summe der E-Modulwerte in Längs- und in Querrichtung oberhalb 10 GPa, bevorzugt oberhalb von 12 GPa. Sie sind gleichzeitig außerordentlich temperaturstabil, d.h. die Schmelzpunkte ($T_m$) liegen oberhalb von 260 °C, insbesondere im Bereich von 270 °C bis 360 °C; die Glasübergangstemperatur liegt oberhalb von 120 °C, insbesondere zwischen 120 und 140 °C. Die Sauerstoff-

durchlässigkeit liegt im Bereich

$$<= 50 \frac{cm^3}{m^2 \cdot d \cdot bar}$$

(gemessen nach DIN 53380 bei 53 % relativer Feuchte und 23 °C bei einer Foliendicke von 12 µm), insbesondere zwischen 10 und 30 $cm^3/m^2 \cdot d \cdot bar$. Die Wasseraufnahme (bei 50 % relativer Feuchte, 23 °C) liegt unter 0,1 %, insbesondere unter 0,06 %. Die Kurve des dielektrischen Verlustfaktors durchläuft bis hin zu Temperaturen von 165 °C kein Maximum über $1{,}2 \cdot 10^{-2}$ (gemessen bei 1 kHz), insbesondere $1{,}0 \cdot 10^{-2}$. Verglichen mit einer gleichdicken PET-Folie, die bei Testende völlig zerstört war, zeigte eine erfindungsgemäße Folie nach 14-tägiger UV-Bestrahlung noch mindestens 50 %, bevorzugt 60 bis 70 %, ihrer ursprünglichen Reißfestigkeit. Folien mit dieser Merkmalskombination sind einzigartig. Keine bisher bekannten Folien weisen in Kombination die obengenannten Eigenschaften auf.

Aufgrund ihrer Eigenschaften eignen sich die erfindungsgemäßen, biaxial orientierten Folien beispielsweise als:

- Träger für magnetische Aufzeichnungsmaterialien wie Video-, Audio-, Computerbänder, Floppy Disks etc.
  Hier macht sich insbesondere die bessere Steifigkeit (höheres E-Modul) bemerkbar, die in einem besseren (Band)-Lauf und weniger Bandbeschädigungen zum Ausdruck kommt.

- Kondensatordielektrika
  Neben der verbesserten Steifigkeit, die zu einer Reduzierung der Abrisse in der Fertigung beiträgt, macht sich hier insbesondere die erhöhte Temperaturbeständigkeit und der geringe elektrische Verlustfaktor auch bei höheren Temperaturen positiv bemerkbar; die Folien sind lötbadfest.

- Segel oder Segelfenster; gegebenenfalls als Laminat mit anderen Folien und/oder gewebten Materialien. Hierfür ist die Steifigkeit und die gute UV-Beständigkeit von Bedeutung.

- Verpackungsmaterial
  Insbesondere auf dem Verpackungssektor ist die geringe Gasdurchlässigkeit der erfindungsgemäßen, biaxial orientierten Folien von Bedeutung. Die Folien sind hydrolysestabil (geringe Wasseraufnahme) und - aufgrund ihrer hohen Temperaturbeständigkeit - sterilisierfähig. Darüber hinaus ist auch für diesen Einsatzzweck die gute UV-Beständigkeit ausschlaggebend.

- Folie im Graphikbereich; als OHP-Folie oder Zeichenmaterial Die erfindungsgemäßen Folien sind dimensionsstabil, temperaturbeständig (Belichtungen) und farblos.

- Elektroisoliermaterial
  Insbesondere für Elektromotoren und Transformatoren werden temperaturbeständige und elektrisch gut isolierende Folien benötigt.

- Trennfolie
  Für diesen Anwendungsbereich zeichnet die gute Wärme- und Chemikalienbeständigkeit der erfindungsgemäßen Folie verantwortlich.

- Träger für flexible gedruckte Schaltungen.

Nachfolgend ist die Erfindung anhand von Beispielen näher erläutert.

Zur Eigenschaftsbestimmung der Folien wurden die folgenden Prüfmethoden angewendet:

**Meßmethoden**

- Zur Bestimmung von $T_g$ und $T_{cc}$ mittels DSC werden amorphe Proben benötigt. Beim ersten Aufheizen bei einer Heizrate von 20 K/min tritt eine stufenweise Erhöhung der Wärmekapazität bei $T_g$ ein. Oberhalb von $T_g$ tritt die exotherme Kaltkristallisation bei $T_{cc}$ (exotherme Peaktemperatur) ein.

- Dichten wurden in Übereinstimmung mit ASTM D1505-68 durch Eintauchen von Proben in Dichtegradientensäuren bestimmt. Zur Herstellung der Dichtegradientensäuren wurden entweder Gemische aus $CCl_4$/Heptan oder wäßrige $ZnCl_2$-Lösungen verwendet.

- Die mechanischen Eigenschaften wurden über Zugprüfung an 100 mm x 15 mm großen Folienstreifen bestimmt. Der Elastizitätsmodul wurde bei einer Zuggeschwindigkeit von 10 %/min zwischen 0,4 und 0,6 % Dehnung bestimmt. Die Reißfestigkeit und Bruchdehnung wurden mit einer Zuggeschwindigkeit von 100 %/min gemessen.

- Die Trübung wurde nach der Prüfnorm ASTM-D1003-61, Methode A (vergrößerter Meßwinkel), bestimmt.

Beispiel 1

In einem üblichen Polykondensationsreaktor mit Schutzgaszuleitung ($N_2$),Druckausgleich, Thermometer, Kühler, Vakuumanschluß und Rührer wurden 289 Gew.-Teile Naphthal-2,6-indicarbonsäure-dimethylester, 322 Gew.-Teile 4,4'-Bibenzoesäure-dimethylester, 368 Gew.-Teile Ethylenglykol und 0,7 Teile Manganacetat-Tetrahydrat vorgelegt. Das Gemisch wurde 2,5 Stunden auf 220 °C erwärmt, währenddessen Methanol abdestilliert wurde. Als Polykondensationskatalysatoren wurden dann 0,675 Gew.-Teile Triphenylphosphat und 0,2259 Teile Antimontrioxid zugegeben und das Gemisch unter Rühren auf 270 °C erwärmt. Vakuum wurde angelegt und die Temperatur auf 285 °C erhöht und 2,5 Stunden gehalten. Ein Teil des so erhaltenen Copolyesters wurde als Schmelze aus dem Reaktor als Blase mit Stickstoffdruck gedrückt und erstarrte als dünne, klare, amorphe Folie. Mittels DSC wurde eine Glastemperatur ($T_g$) von 123 °C und eine Kaltkristallisationstemperatur ($T_{cc}$) von 132 °C an der Folie gemessen.

Die restliche Schmelze wurde granuliert. Das Granulat war weiß, opak und kristallin. Am Granulat wurde ein IV-Wert von 0,56 dl/g gemessen (gemessen bei einer Konzentration von 0,1 g/ml in Pentafluorphenol/Hexafluorisopropanol [Volumenverhältnis 1:1] bei 25 °C).

Das Granulat wurde 20 Stunden bei 240 °C unter Vakuum in der Festphase aufkondensiert. Danach betrug der IV-Wert 1,1 dl/g. Im DSC-Meßschrieb am kristallinen, festphasenkondensierten Granulat waren erwartungsgemäß keine $T_g$ oder $T_{cc}$ erkennbar; die Schmelztemperatur ($T_m$) betrug 281 °C.

Beispiel 2 (Vorfolie)

Das PENBB-Granulat aus Beispiel 1 mit der Schmelztemperatur von 281 °C wurde in einem Einschneckenextruder bei Temperaturen von 280 bis 320 °C aufgeschmolzen und durch eine Breitschlitzdüse auf eine bei 20 °C temperierte Kühlwalze extrudiert. Es wurde eine 120 µm dicke Folie erhalten, die klar und transparent war. Ihre Dichte betrug 1,312 g/cm$^3$ und ihr IV-Wert 0,78 dl/g. Die mechanischen Eigenschaften waren:

| | längs | quer |
|---|---|---|
| Elastizität | 2,1 GPa | 2,1 GPa |
| Reißfestigkeit | 74 MPa | 74, MPa |
| Reißdehnung | 251 % | 247 % |

Beispiel 3

Die PENBB-Vorfolie aus Beispiel 2 wurde bei 135 °C simultan biaxial orientiert auf das Vier- mal Vierfache ihrer ursprünglichen Länge und Breite unter Verwendung einer Simultanfolienstreckeinrichtung. Die Dichte lag bei 1,313 g/cm$^3$. Die Foliendicke betrug 8 µm und die Folie war klar und transparent. Die mechanischen Eigenschaften waren:

| | längs | quer |
|---|---|---|
| Elastizitätsmodul | 5,8 GPa | 5,1 GPa |
| Reißfestigkeit | 154 MPa | 198 MPa |
| Reißdehnung | 19 % | 44 % |

Beispiel 4

PENBB-Folie aus Beispiel 4 wurde in einen Spannrahmen eingespannt und bei 260 °C 10 min. in der Wärme behandelt. Die Folie blieb transparent (Trübung 3,7 %) und ihre Dichte betrug 1,330g/cm$^3$. Die mechanischen Eigenschaften waren:

| | längs | quer |
|---|---|---|
| Elastizitätsmodul | 8,9 GPa | 8,1 GPa |

(fortgesetzt)

| | längs | quer |
|---|---|---|
| Reißfestigkeit | 204 MPa | 256 MPa |
| Reißdehnung | 13 % | 38 % |

Beispiel 5

Die PENBB-Vorfolie aus Beispiel 2 wurde bei 140 °C auf einer Folienstreckeinrichtung sequentiell biaxial (erst quer dann längs; 3,5x3,5) orientiert. Es wurde eine 8 µm dicke, klare Folie erhalten. Die Folie wurde in einen Spannrahmen eingespannt und bei 260 °C 10 min. in der Wärme behandelt. Ihre Dichte betrug 1,343 g/cm$^3$. Die mechanischen Eigenschaften waren:

| | längs | quer |
|---|---|---|
| Elastizitätsmodul | 9,2 GPa | 8,0 GPa |
| Reißfestigkeit | 237 MPa | 182 MPa |
| Reißdehnung | 25 % | 17 % |

**Patentansprüche**

1. Ein- oder mehrschichtige biaxial orientierte Folien mit einer Gesamtdicke von 0,05 bis 500 µm, enthaltend einen Copolyester, der mindestens zwei verschiedene dicarbonsäureabgeleitete Wiederholungseinheiten enthält, von denen eine eine Wiederholungseinheit der Formel

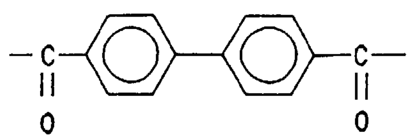

ist, wobei diese Wiederholungseinheit 25-90 Mol-% der im Copolyester vorhandenen dicarbonsäureabgeleiteten Wiederholungseinheiten ausmacht und als diolabgeleitete Komponente 90 bis 100 Mol-% (bezogen auf die im Copolyester vorhandenen diolabgeleiteten Wiederholungseinheiten) an Wiederholungseinheiten der Formel -O-$(CH_2)_n$-O- mit n=2 bis 6 enthält.

2. Biaxial orientierte Folie nach Anspruch 1, dadurch gekennzeichnet, daß der Copolyester als dicarbonsäureabgeleitete Wiederholungseinheiten neben dem Baustein der Formel

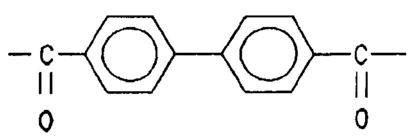

noch weitere dicarbonsäureabgeleitete Wiederholungseinheiten der Formeln

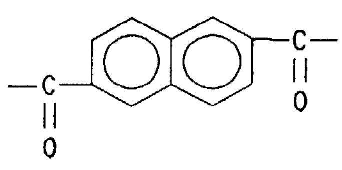

und/oder

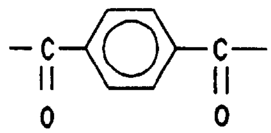

enthält.

3. Biaxial orientierte Folie nach Anspruch 1 oder 2 dadurch gekennzeichnet, daß der Copolyester weniger als 10 Mol-% (bezogen auf die im Copolyester vorhandenen dicarbonsäureabgeleiteten Wiederholungseinheiten) an Wiederholungseinheiten der Formel

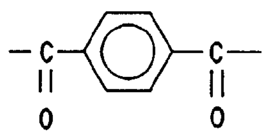

enthält.

4. Ein- oder mehrschichtige biaxial orientierte Folie mit einer Gesamtdicke von 0,05 bis 500 µm, wobei mindestens eine Schicht dieser Folie aus einem Polymeren aus den Wiederholungseinheiten -(A-B)- und 0 bis 10 Gew.-% Additiven besteht, wobei die beiden Komponenten A und B in etwa gleichen molaren Anteilen im Polymeren vorhanden sind und wobei die Komponente A aus: 1 bis 75 Mol-% der Wiederholungseinheit der Formel I

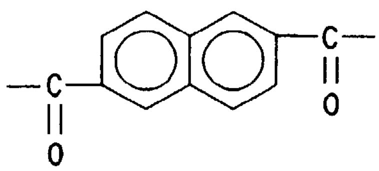 (I)

90 bis 25 Mol-% der Wiederholungseinheit der Formel II

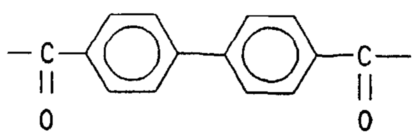 (II)

und
0 bis 10 Mol-% einer oder mehrerer Wiederholungseinheiten A' ausgewählt aus

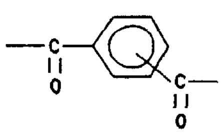 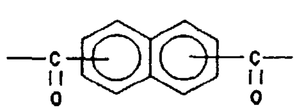 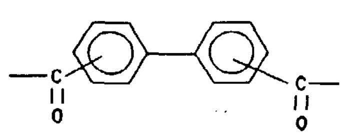

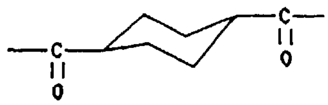 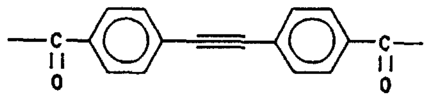

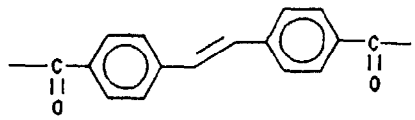

und $C_{1-6}$-alkyldicarbonsäuren

besteht, mit der Maßgabe, daß die Summe der Bestandteile der Formeln I, II und A' 100 Mol-% nicht übersteigt und wobei die Komponente B aus:

90 bis 100 Mol-% der Wiederholungseinheit der Formel III

$$-O-(CH_2)_n-O \qquad \text{(III)}$$

mit n = 2-6

und

0 bis 10 Mol-% einer oder mehrerer Wiederholungseinheiten B', ausgewählt aus:

$$-O-(CH_2)_m-O-$$

mit

m = 2 bis 6, bevorzugt 2 bis 4, wobei

m ≠ n

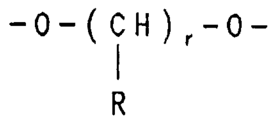

mit

r = 2 bis 6, bevorzugt 2 bis 4

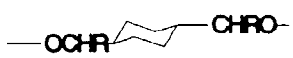

endo and/or exo

R = H, $C_1$-$C_4$-Alkyl

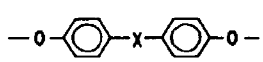

mit

X = $-CH_2-$, $-C(CH_3)_2-$, -O-, $-C(CF_3)_2-$, S-, $-SO_2-$

und

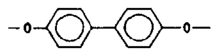

besteht
sowie 0 bis 10 Mol-% einer Wiederholungseinheit C, die ausgewählt ist aus:

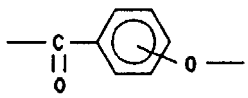 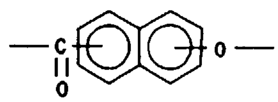

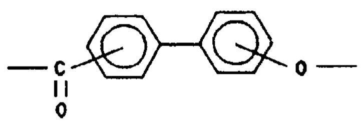

und Hydroxy-$C_{1-6}$-alkylcarbonsäuren,
wobei jeweils eine Wiederholungseinheit C jeweils eine Wiederholungseinheit A und eine Wiederholungseinheit B ersetzt.

**5.** Biaxial orientierte Folie nach Anspruch 4, dadurch gekennzeichnet, daß n = 2 ist.

**6.** Biaxial orientierte Folie nach einem oder mehreren der Ansprüche 1 bis 5, dadurch gekennzeichnet, daß die aromatischen Ringsysteme ein-, zwei- oder mehrfach substituiert sind mit einem oder mehreren gleichen oder verschiedenen Resten ausgewählt aus:
$C_{1-6}$-Alkyl, Halogen, CN, $NO_2$, $CF_3$, $C_{1-5}$-Alkoxy und Phenyl.

**7.** Biaxial orientierte Folie nach einem oder mehreren der Ansprüche 1 bis 6, dadurch gekennzeichnet, daß die inhärente Viskosität des Copolyesters ≥ 0,2 dl/g ist (gemessen bei einer Konzentration von 0,1 g/ml in Pentafluorphenol/Hexafluorisopropanl; Volumenverhältnis 1:1 bei 25 °C).

**8.** Biaxial orientierte Folie nach einem oder mehreren der Ansprüche 1 bis 7, dadurch gekennzeichnet, daß sie in einer oder mehreren Schichten Partikel enthält.

**9.** Biaxial orientierte Folie nach einem oder mehreren der Ansprüche 1 bis 8, dadurch gekennzeichnet, daß sie in einer oder mehreren Schichten Partikel enthält, die ausgewählt sind aus:
Kaolin, Talk, $SiO_2$, $MgCO_3$, $CaCO_3$, $BaCO_3$, $CaSO_4$, $BaSO_4$, $Li_3PO_4$, $Ca_3(-PO_4)_2$, $Mg_3(PO_4)_2$, $Al_2O_3$, LiF, Ca-, Ba-, Zn-, Mn-Salze der Terephthalsäure, Kohlenstoff und Mischungen dieser Stoffe.

**10.** Biaxial orientierte Folie nach Anspruch 8 oder 9, dadurch gekennzeichnet, daß die Partikel eine Größe von 0,001 bis 10 µm aufweisen.

**11.** Biaxial orientierte Folie nach einem oder mehreren der Ansprüche 8 bis 10, dadurch gekennzeichnet, daß die Partikel in einer Menge von 0,01 bis 1 Gew.-% (bezogen auf das Gewicht der Schicht) vorhanden sind.

**12.** Biaxial orientierte Folie nach einem oder mehreren der Ansprüche 1 bis 11, dadurch gekennzeichnet, daß sie eine Flachfolie ist.

**13.** Biaxial orientierte Folie nach einem oder mehreren der Ansprüche 1 bis 12, dadurch gekennzeichnet, daß sie schlauchförmig ist.

**14.** Biaxial orientierte Folie nach einem oder mehreren der Ansprüche 1 bis 13, dadurch gekennzeichnet, daß sie thermofixiert ist.

**15.** Biaxial orientierte Folie nach einem oder mehreren der Ansprüche 1 bis 14, dadurch gekennzeichnet, daß ihre Dichte im Bereich von 1,28 bis 1,37 g/cm$^3$ liegt.

**16.** Biaxial orientierte Folie nach einem oder mehreren der Ansprüche 1 bis 12 oder 15, dadurch gekennzeichnet, daß die Doppelbrechung $\Delta n < 0{,}2$ ist und der IV-Wert des PENBB >0,5 dl/g ist.

**17.** Biaxial orientierte Folie nach einem oder mehreren der Ansprüche 1 bis 16, dadurch gekennzeichnet, daß sie kristallin ist.

**18.** Biaxial orientierte Folie, nach einem oder mehreren der Ansprüche 1-17 enthaltend Polyethylennaphthalat-bibenzoat (PENBB), gekennzeichnet durch einen $T_m$-Wert im Bereich von 270 bis 360 °C, eine Summe der E-Modul-Werte in Längs- und in Querrichtung von ≥ 10 GPa, und einen $T_g$-Wert von mindestens 120 °C.

**19.** Biaxial orientierte Folie nach Anspruch 18, dadurch gekennzeichnet, daß sie einschichtig ist und Verarbeitungshilfsmittel oder Gleitmittel in Mengen bis zum 1 % enthält.

**20.** Verfahren zur Herstellung einer biaxial orientierten Folie gemäß einem der Ansprüche 1 bis 4, dadurch gekennzeichnet, daß man

a) einen Polyester gemäß Anspruch 1, 2, 3 oder 4 und 0 bis 10 Gew.-% Additiven durch eine Düse extrudiert oder gegebenenfalls zusammen mit einer oder mehreren weiteren Schichten koextrudiert und gegebenenfalls anschließend abkühlt, und
b) simultan oder nacheinander ein- oder mehrfach längs und/oder ein- oder mehrfach quer zur Transportrichtung streckt, und
c) anschließend thermofixiert.

**21.** Verwendung einer biaxial orientierten Folie gemäß einem oder mehreren der Ansprüche 1 bis 19 als Träger für magnetische Aufzeichnungsmedien.

**22.** Verwendung einer biaxial orientierten Folie gemäß einem oder mehreren der Ansprüche 1 bis 19 als Kondensatordielektrikum.

**23.** Verwendung einer biaxial orientierten Folie gemäß einem oder mehreren der Ansprüche 1 bis 19 als Segel oder Segelfenster.

**24.** Verwendung einer biaxial orientierten Folie aemäß einem oder mehreren der Ansprüche 1 bis 19 als Verpackungsmaterial.

**25.** Verwendung einer biaxial orientierten Folie gemäß einem oder mehreren der Ansprüche 1 bis 19 als reprographische Folie.

**26.** Verwendung einer biaxial orientierten Folie gemäß einem oder mehreren der Ansprüche 1 bis 19 als Isolierfolie für Transformatoren, Elektromotoren und Kabeln.

**27.** Verwendung einer biaxial orientierten Folie gemäß einem oder mehreren der Ansprüche 1 bis 19 als Trennfolie.

**28.** Verwendung einer biaxial orientierten Folie gemäß einem oder mehreren der Ansprüche 1 bis 19 als Träger für flexible gedruckte Schaltungen.

**29.** Verwendung einer biaxial orientierten Folie gemäß Anspruch 1 bis 19 als Folientastatur.

## Claims

**1.** A single-layer or multi-layer biaxially oriented film having a total thickness of from 0.05 to 500 µm, comprising a copolyester which contains at least two different repeating units derived from dicarboxylic acid, one such unit being a repeating unit of the formula

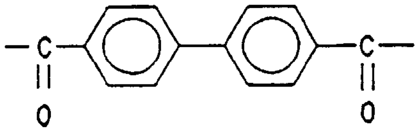
,

said repeating unit making up 25-90 mol% of the repeating units derived from dicarboxylic acid which are present in the copolyester, and contains, as component derived from diol, 90 to 100 mol% (based on the repeating units derived from diol which are present in the copolyester) of repeating units of the formula $-O-(CH_2)_n-O-$ where n = 2 to 6.

2. The biaxially oriented film as claimed in claim 1, wherein as repeating units derived from dicarboxylic acid the copolyester also contains, in addition to the unit of the formula

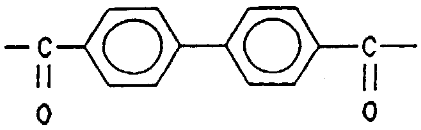
,

further repeating units of the formulae

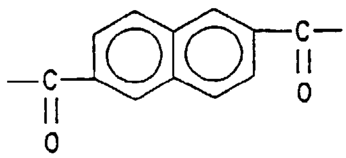

and/or

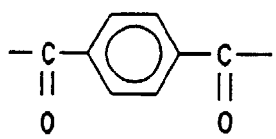

derived from dicarboxylic acid.

3. The biaxially oriented film as claimed in claim 1 or 2, wherein the copolyester contains less than 10 mol% (based on the repeating units derived from dicarboxylic acid which are present in the copolyester) of repeating units of the formula

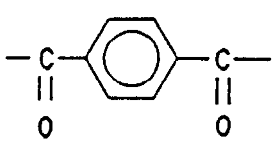
.

4. A single-layer or multi-layer biaxially oriented film having a total thickness of from 0.05 to 500 µm, at least one layer of this film being composed of a polymer of the repeating units -(A-B)- and from 0 to 10% by weight of

additives, the two components A and B being present in the polymer in approximately equal molar proportions and component A being composed of:
from 1 to 75 mol% of the repeating unit of the formula I

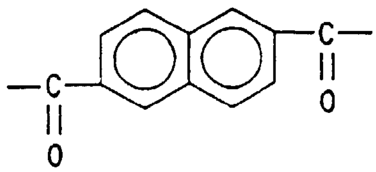

( I )

from 90 to 25 mol% of the repeating unit of the formula II

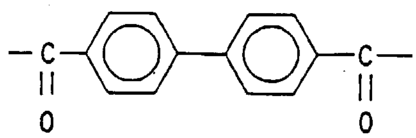

( I I )

and
from 0 to 10 mol% of one or more repeating units A' selected from

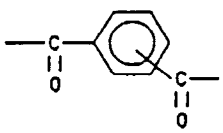

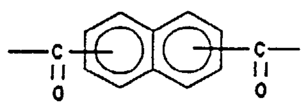

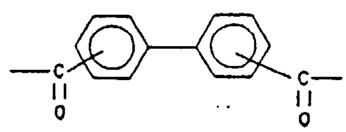

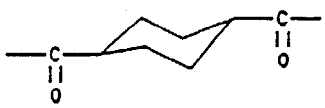

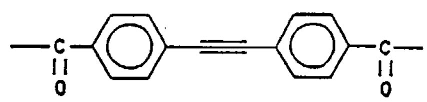

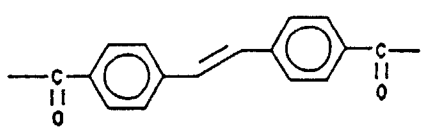

and $C_{1-6}$-alkyldicarboxylic acids,
with the proviso that the sum of the constituents of the formulae I, II and A' does not exceed 100 mol%, and component B being composed of:
from 90 to 100 mol% of the repeating unit of the formula III

$$-O-(CH_2)_n-O \qquad (III)$$

where n = 2-6
and
from 0 to 10 mol% of one or more repeating units B', selected from:

-O-$(CH_2)_n$-O-

where m = 2 to 6, preferably 2 to 4, and m ≠ n

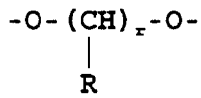

where r = 2 to 6, preferably 2 to 4

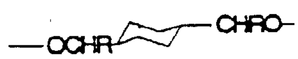

endo and/or exo

R = H or $C_1$-$C_4$-alkyl

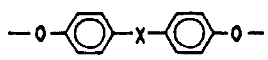

where X = -$CH_2$-, -$C(CH_3)_2$-, -O-, -$C(CF_3)_2$-, -S- or -$SO_2$-
and

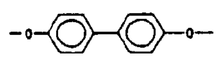

as well as from 0 to 10 mol% of a repeating unit C, which is selected from:

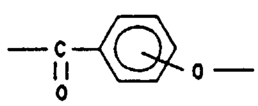 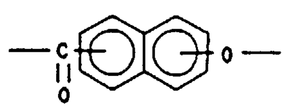

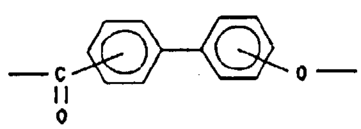

and hydroxy-$C_{1-6}$-alkylcarboxylic acids,
in each case one repeating unit C in each case replacing one repeating unit A and one repeating unit B.

**5.** The biaxially oriented film as claimed in claim 4, wherein n = 2.

**6.** The biaxially oriented film as claimed in one or more of claims 1 to 5, wherein the aromatic ring systems are monosubstituted, disubstituted or polysubstituted by one or more identical or different radicals selected from: $C_{1-6}$-alkyl, halogen, CN, $NO_2$, $CF_3$, $C_{1-5}$-alkoxy and phenyl.

**7.** The biaxially oriented film as claimed in one or more of claims 1 to 6, wherein the intrinsic viscosity of the copolyester is ≥0.2 dl/g (measured at a concentration of 0.1 g/ml in pentafluorophenol/hexafluoroisopropanol; volume ratio 1:1, at 25°C).

**8.** The biaxially oriented film as claimed in one or more of claims 1 to 7, which comprises particles in one or more layers.

**9.** The biaxially oriented film as claimed in one or more of claims 1 to 8, which comprises particles in one or more layers, which particles are selected from:
kaolin, talc, $SiO_2$, $MgCO_3$, $CaCO_3$, $BaCO_3$, $CaSO_4$, $BaSO_4$, $Li_3PO_4$, $Ca_3(PO_4)_2$, $Mg_3(PO_4)_2$, $Al_2O_3$, LiF, Ca, Ba, Zn or Mn salts of terephthalic acid, carbon and mixtures of these substances.

**10.** The biaxially oriented film as claimed in claim 8 or 9, wherein the particles have a size of from 0.001 to 10 μm.

**11.** The biaxially oriented film as claimed in one or more of claims 8 to 10, wherein the particles are present in an amount of from 0.01 to 1% by weight (based on the weight of the layer).

**12.** The biaxially oriented film as claimed in one or more of claims 1 to 11, which is a flat film.

**13.** The biaxially oriented film as claimed in one or more of claims 1 to 12, which is tubular.

**14.** The biaxially oriented film as claimed in one or more of claims 1 to 13, which is heat-set.

**15.** The biaxially oriented film as claimed in one or more of claims 1 to 14, wherein its density is in the range from 1.28 to 1.37 $g/cm^3$.

**16.** The biaxially oriented film as claimed in one or more of claims 1 to 12 or 15, wherein the birefringence $\Delta n$ is $<0.2$ and the IV value of the PENBB is >0.5 dl/g.

**17.** The biaxially oriented film as claimed in one or more of claims 1 to 16, which is crystalline.

**18.** The biaxially oriented film as claimed in one or more of claims 1-17 containing polyethylene naphthalate bibenzoate (PENBB), which has a $T_m$ value in the range from 270 to 360°C, a sum of the values for the modulus of elasticity in the longitudinal and in the transverse direction of ≥10 GPa, and a $T_g$ value of at least 120°C.

**19.** The biaxially oriented film as claimed in claim 18, which is single-layer and comprises processing auxiliaries or lubricants in amounts of up to 1%.

**20.** A process for the production of a biaxially oriented film as claimed in one of claims 1 to 4, wherein

a) a polyester as claimed in claim 1, 2, 3 or 4 and from 0 to 10% by weight of additives are extruded through a die or optionally are coextruded together with one or more further layers, and optionally then cooled, and
b) stretched, simultaneously or successively, once or more longitudinally and/or once or more transversely to the direction of transport, and
c) then heat-set.

**21.** The use of a biaxially oriented film as claimed in one or more of claims 1 to 19 as a carrier for magnetic recording media.

**22.** The use of a biaxially oriented film as claimed in one or more of claims 1 to 19 as a capacitor dielectric.

**23.** The use of a biaxially oriented film as claimed in one or more of claims 1 to 19 as a sail or sail window.

**24.** The use of a biaxially oriented film as claimed in one or more of claims 1 to 19 as packaging material.

**25.** The use of a biaxially oriented film as claimed in one or more of claims 1 to 19 as reprographic film.

**26.** The use of a biaxially oriented film as claimed in one or more of claims 1 to 19 as insulating film for transformers, electric motors and cables.

**27.** The use of a biaxially oriented film as claimed in one or more of claims 1 to 19 as release film.

**28.** The use of a biaxially oriented film as claimed in one or more of claims 1 to 19 as support for flexible printed circuits.

**29.** The use of a biaxially oriented film as claimed in claim 1 to 19 as film keyboard.

## Revendications

**1.** Pellicules mono- ou multicouches orientées biaxalement, ayant une épaisseur totale de 0,05 à 500 µm, contenant un copolyester qui contient au moins deux motifs répétitifs différents dérivés d'acides dicarboxyliques, dont l'un est un motif répétitif de formule

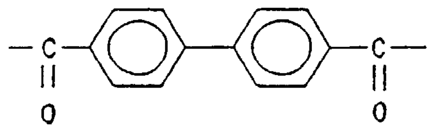

ce motif répétitif représentant 25-90 % en moles des motifs répétitifs dérivés d'acides dicarboxyliques présents dans le copolyester, et, en tant que composant dérivé de diol, de 90 à 100 % en moles (par rapport aux motifs répétitifs dérivés de diols présents dans le copolyester) de motifs répétitifs de formule $-O-(CH_2)_n-O-$, dans laquelle n = 2 à 6.

**2.** Pellicule orientée biaxalement selon la revendication 1, caractérisée en ce que le copolyester contient, en tant que motifs répétitifs dérivés d'acides dicarboxyliques, en plus du composant de formule

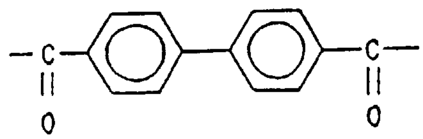

encore d'autres motifs répétitifs dérivés d'acides dicarboxyliques, de formules

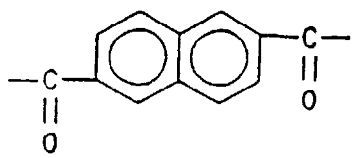

et/ou

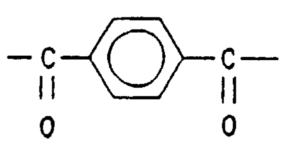

**3.** Pellicule orientée biaxalement selon la revendication 1 ou 2, caractérisée en ce que le copolyester contient moins de 10 % en moles (par rapport aux motifs répétitifs dérivés d'acides dicarboxyliques présents dans le copolyester) de motifs répétitifs de formule

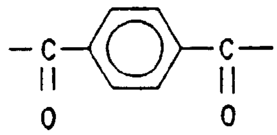

4. Pellicule mono- ou multicouche, orientée biaxalement, ayant une épaisseur totale de 0,05 à 500 µm, au moins une couche de cette pellicule étant constituée d'un polymère composé des motifs répétitifs -(A-B)- et de 0 à 10 % en poids d'additifs, les deux composants A et B étant présents en proportions molaires approximativement égales dans le polymère et le composant A étant constitué de:
1 à 75 % en moles du motif répétitif de formule I

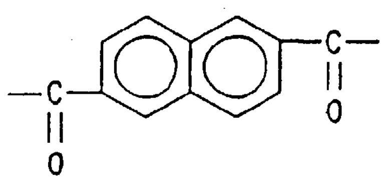

( I )

90 à 25 % en moles du motif répétitif de formule II

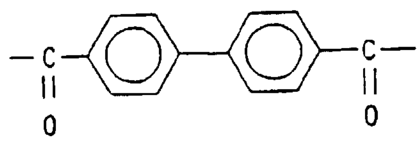

( I I )

et
0 à 10 % en moles d'un ou plusieurs motifs répétitifs A' choisis parmi

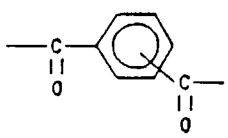

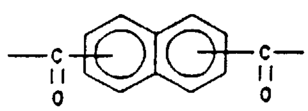

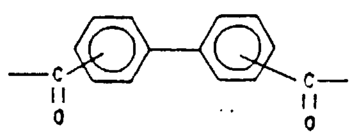

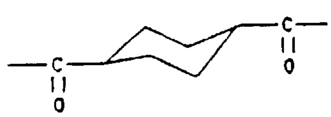

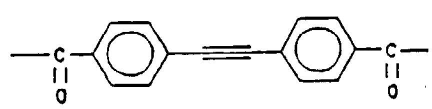

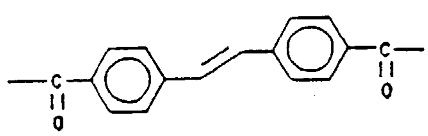

et des acides alkyl($C_{1-6}$)dicarboxyliques,
étant entendu que la somme des composants de formules I, II et A' n'excède pas 100 % en moles et le composant B étant constitué de
90 à 100 % en moles du motif répétitif de formule III

$$-O-(CH_2)_n-O \qquad (III)$$

avec n = 2-6
et 0 à 10 % en moles d'un ou plusieurs motifs répétitifs B', choisis parmi:

$$-O-(CH_2)_m-O-$$

avec m = 2-6, de préférence 2-4, m étant ≠ n,

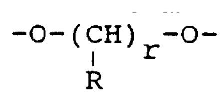

avec r = 2-6, de préférence 2-4

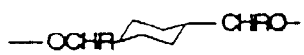
endo et/ou exo

R = H, alkyle en $C_1$-$C_4$

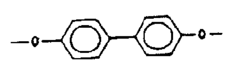

avec X = $-CH_2-$, $-C(CH_3)_2-$, -O-, $-C(CF_3)_2-$, -S-, $-SO_2-$
et

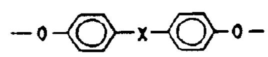

ainsi que 0-10 % en moles d'un motif répétitif C, qui est choisi parmi:

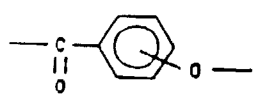
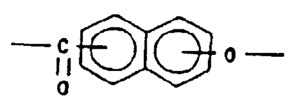

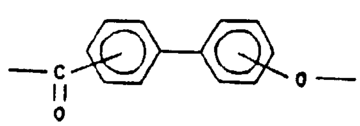

et des acides hydroxyalkyl($C_{1-6}$)carboxyliques, un motif répétitif C remplaçant chaque fois un motif répétitif A et un motif répétitif B.

**5.** Pellicule orientée biaxalement selon la revendication 4, caractérisée en ce que n = 2.

**6.** Pellicule orientée biaxalement selon une ou plusieurs des revendications 1 à 5, caractérisée en ce que les systèmes cycliques aromatiques sont une fois, deux fois ou plus de deux fois substitués par un ou plusieurs substituants choisis parmi:

des atomes d'halogène et des groupes alkyle en $C_{1-6}$, CN, $NO_2$, $CF_3$, alcoxy en $C_{1-5}$ et phényle.

**7.** Pellicule orientée biaxialement selon une ou plusieurs des revendications 1 à 6, caractérisée en ce que la viscosité inhérente du copolyester est ≥ 0,2 dl/g (mesurée à une concentration de 0,1 g/ml dans du pentafluorophénol/hexafluoroisopropanol; rapport en volume 1:1, à 25°C).

**8.** Pellicule orientée biaxialement selon une ou plusieurs des revendications 1 à 7, caractérisée en ce qu'elle contient des particules dans une ou plusieurs couches.

**9.** Pellicule orientée biaxialement selon une ou plusieurs des revendications 1 à 8, caractérisée en ce qu'elle contient, dans une ou plusieurs couches, des particules qui sont constituées de:
kaolin, talc, $SiO_2$, $MgCO_3$, $CaCO_3$, $BaCO_3$, $CaSO_4$, $BaSO_4$, $LiSO_4$, $Ca_3(PO_4)_2$, $Mg_3(PO_4)_2$, $Al_2O_3$, LiF, de sels de Ca, Ba, Zn, Mn de l'acide téréphtalique, de carbone ou de mélanges de ces substances.

**10.** Pellicule orientée biaxialement selon la revendication 8 ou 9, caractérisée en ce que les particules présentent une taille de 0,001 à 10 µm.

**11.** Pellicule orientée biaxialement selon une ou plusieurs des revendications 8 à 10, caractérisée en ce que les particules sont présentes en une proportion de 0,01 à 1 % en poids (par rapport au poids de la couche).

**12.** Pellicule orientée biaxialement selon une ou plusieurs des revendications 1 à 11, caractérisée en ce qu'elle est une pellicule plane.

**13.** Pellicule orientée biaxialement selon une ou plusieurs des revendications 1 à 12, caractérisée en ce qu'elle est en forme de boyau.

**14.** Pellicule orientée biaxialement selon une ou plusieurs des revendications 1 à 13, caractérisée en ce qu'elle est thermofixée.

**15.** Pellicule orientée biaxialement selon une ou plusieurs des revendications 1 à 14, caractérisée en ce que sa densité se situe dans la plage allant de 1,28 à 1,37 g/$cm^3$.

**16.** Pellicule orientée biaxialement selon une ou plusieurs des revendications 1 à 12 ou 15, caractérisée en ce que la biréfringence $\Delta n$ est < 0,2 et l'indice de VI du PENBB est > 0,5 dl/g.

**17.** Pellicule orientée biaxialement selon une ou plusieurs des revendications 1 à 16, caractérisée en ce qu'elle est cristalline.

**18.** Pellicule orientée biaxialement selon une ou plusieurs des revendications 1 à 17, contenant du poly(naphtalate-bibenzoate d'éthylène) (PENBB), caractérisée par un indice $T_m$ dans la plage de 270 à 360°C, une somme des modules d'élasticité dans le sens longitudinal et dans le sens transversal de ≥ 10 GPa, et une $T_v$ d'au moins 120°C.

**19.** Pellicule orientée biaxialement selon la revendication 18, caractérisée en ce qu'elle est mono-couche et contient des adjuvants de mise en oeuvre ou des lubrifiants en proportions allant jusqu'à 1 %.

**20.** Procédé pour la fabrication d'une pellicule orientée biaxialement selon l'une des revendications 1 à 4, caractérisé en ce que

a) on extrude, ou éventuellement co-extrude conjointement avec une ou plusieurs autres couches, par une filière un polyester selon la revendication 1, 2, 3 ou 4 et de 0 à 10 % en poids d'additifs, et éventuellement on le refroidit ensuite, et
b) on l'étire simultanément ou successivement une ou plusieurs fois longitudinalement et/ou une ou plusieurs fois transversalement par rapport au sens du transport, et
c) ensuite ou le soumet à un thermofixage.

**21.** Utilisation d'une pellicule orientée biaxalement selon une ou plusieurs des revendications 1 à 19, en tant que support pour milieux d'enregistrement magnétique.

**22.** Utilisation d'une pellicule orientée biaxalement selon une ou plusieurs des revendications 1 à 19, en tant que diélectrique de condensateur.

**23.** Utilisation d'une pellicule orientée biaxalement selon une ou plusieurs des revendications 1 à 19, en tant que voile ou fenêtre de voile.

**24.** Utilisation d'une pellicule orientée biaxalement selon une ou plusieurs des revendications 1 à 19, en tant que matériau d'emballage.

**25.** Utilisation d'une pellicule orientée biaxalement selon une ou plusieurs des revendications 1 à 19, en tant que pellicule reprographique.

**26.** Utilisation d'une pellicule orientée biaxalement selon une ou plusieurs des revendications 1 à 19, en tant que pellicule isolante pour transformateurs, moteurs électriques et câbles.

**27.** Utilisation d'une pellicule orientée biaxalement selon une ou plusieurs des revendications 1 à 19, en tant que pellicule de séparation.

**28.** Utilisation d'une pellicule orientée biaxalement selon une ou plusieurs des revendications 1 à 19, en tant que support de circuits imprimés flexibles.

**29.** Utilisation d'une pellicule orientée biaxalement selon une ou plusieurs des revendications 1 à 19, en tant que que clavier à membrane.